# NEW EUROPEAN PATENT SPECIFICATION

(11) **EP 0 299 117 B2**
(45) Date of publication and mention of the opposition decision: **26.10.1994**
(45) Mention of the grant of the patent: 29.05.1991
(21) Application number: 87202400.5
(22) Date of filing: 23.11.1987
(51) Int. Cl.: B29C 67/22, B29C 43/54

(54) **Method and apparatus for the moulding of articles in polyurethane**
Verfahren und Vorrichtung zum Formen von Polyurethan-Gegenständen
Procédé et dispositif pour mouler des articles en polyuréthane

(30) Priority: 27.11.1986 IT 2247286
(43) Date of publication of application: 18.01.1989
(73) Proprietor: GUSBI Officina Meccanica S.p.A., 27029 Vigevano (Pavia) (IT)
(72) Inventor: Gaud, Raoult Marie, I-24040 Zingonia di Verdellino (BG) (IT); Terenzio, Bianchi, I-27029 Vigevano (PV) (IT)
(74) Representative: Kador & Partner

(56) References cited:
- EP-A- 0 024 610
- EP-A- 0 206 100
- DE-A- 1 685 421
- US-A- 3 125 617
- US-A- 3 291 873
- US-A- 4 160 074

## Description

The present invention refers to a method and an apparatus for moulding articles in polyurethane material. The invention further concerns a die mould construction or apparatus for the production of articles in polyurethane material according to the method referred to above, in particular for the production of shoe soles and portions thereof, articles for car industry, as well as technical articles.

According to Prior Art method of manufactoring polyurethane articles, particularly polyurethane shoe soles or portions thereof in compact and semi-compact polyurethane, a prescribed ammount of liquid material consisting of a mixture of at least a polyole and an isocyanate with reactants, is charged by casting, pouring or by injection into the cavity of a mould. The mould must be in closed condition when the material is fed into the cavity by injection methods, or the same mould is open during charging with casting or pouring methods and than the mould must be immediantelly closed after the charging of the liquid polyurethane, to avoid overflow from the open mould. The mould remains closed until the polymerization process is sufficently advanced to open the mould for demoulding the shaped article.

In the Prior Art methods for manufacturing polyurethane articles the liquid material will tend to foam or to partially expand into a closed space; it is therefore necessary to provide means for the venting the air or gases from the mould, particulaly the air which has been trapped within the polyurethane material and the internal walls of the mould, in order to prevent the formation of air bubbles or air cavities on the outer surface of the moulded article. The venting of air or gasses which tends to adher to inner surface of the mould, is critical. To such end vent holes or small air exit channels are usually provided in suitable positions of the mould cavity. However in the Prior Art production of polyurethane articles having protrusions or particularly complex markings and designs, for example in moulding of the ground-most surfaces of shoe soles, or whenever the articles require an extremely high quality or finishing of the outer surface, the presence of air bubbles or air cavities of even small dimensions, can not be prevented.

The above problem is prevalently due to the fact that the internal pressure developed by gases which causes the expansion or the foaming of the polyurethene material against the internal surfaces of the mould, is rather low and little to more than one kg/sq.cm. (=0,lMPa); therefore no possibility exist to increase said pressure and to influence positively it from outside in order to obtain more precise markings or designs reproduction on the moulded article. In any event, in the Prior Art method of manufacturing polyurethane articles the pressure cannot be increased to any significant extent.

Furthermore to apply a pressure to a liquid polyurethane mixture into a closed cavity of a mould in order to achieve higher compression inevitably requires particularly complex construction of the moulds to prevent the overflowing of the mixture and in practice does not adequately solve the problem of eliminating air bubbles because the bubbles trapped between the internal walls of the mould and the mixture are merely compressed by the polyurethane against the inside walls of the mould.

US-A-3.291.873 describes a method for manufacturing moulded articles where foamable liquid polyurethane is used, in which the compressive force of closing plate is exerted when polyurethane is still plastic.

In US-A-4 160 074 no external stress or force is exerted on the foaming polyurethane foam. According to US-A-3 125 617 compressive forces are exerted after the mixture has reacted and expanded.

From tests and experiments it has been now devised that the problem can be positively solved by applying a pressure for compacting the polyurethane mixture in the mould when the same mixture is in a particular condition during the polymerization process, in which the polyurethane material is capable of assuming and maintaining the shape of the internal impressions or design of the cavity of the mould.

Therefore an object of this invention is to provide a moulding method for manufacturing articles of polyurethane material by which it is possible to eliminate or substantially reduce defects caused by air-bubbles on the outer surface of moulded articles.

A further object of the invention is to provide moulded articles in polyurethane material, having an higher finishing degree of the outer surfaces.

A further object of this invention is to provide a method for manufacturing articles moulded in compact anhydrous, or semi-compact polyurethane containing low percentages of water in their formulation, by using moulds having an extremely simple construction through which the air-bubble problem can be obviated and which allows to apply high pressures without producing excessive overflows to maintain at the minimum the wasted material.

According to the invention, a method for moulding articles in polyurethane material having surfaces free from air bubbles or air cavities has been provided which comprises the steps of: feeding a metered quantity of a liquid polyurethane material into a cavity of a mould,
applying a compressive force to said polyurethane material (24) for at least part of the polymerization process, and
letting the polyurethane material polymerize to a solid state and to assume the shape of the mould cavity,
   characterized by
feeding said liquid polyurethane material into said cavity and an additional cavity, constituting an extension of said cavity and being filled with an extra-charge of the polyurethane material, of the mould with the mould being in the open condition, allowing said liquid polyurethane material to start an initial phase of polymerization and to assume a flowable evolving plastic condition comprised between the liquid and solid state,
maintain said polyurethane material in an unrestrained condition in the cavity of the mould until it assumes said evolving plastic condition,
close the mould and compress the polyurethane material at a time Tₓ being after the gel time (T₂) or the cream time (T₆) but preceeding the filament time (T₃), by applying a compressive force to the polyurethane material in the mould greater than 2 kg/cm² (0,203 MPa).

For the purpose of present invention, "intermediate polymeric condition or semi-solid state" means a condition of the polyurethane during the polymerizing process, which is successive to the liquid state at which the polyurethane material has been fed into the mould, and comprised within a time interval during which the passage of the polyurethane material from liquid to solid state takes place when the polyurethane material has not yet fully hardened or polymerized and remains in a state capable of subjecting to plastic deformations.

The exact instant for applying the pressure to material in the mould may vary according to the formulation and characteristics of the polyurethane or according to other specific requirements of the moulded article; therefore on the ground of the general principles of this invention according to which the compression phase of polyurethane takes place into the mould during the polymerisation process when the polyurethane material has begun but has not yet completed its transition from liquid to solid state, in practice the starting moment for applying pressure can be exactelly determined by specific trials.

The value of the pressure or compression applied to the polyurethane material will vary according to specific working conditions or characteristics of the material, from the shape and dimensions of the cavity in the mould or the moulded articles. In general term the compression or the pressure exerted on the polyurethane material in the mould must be greater than the specific reaction exerted by semi-solid polyurethane to be compressed and compacted into the mould, and must be maintained for a period of time sufficient to allow compacted the polyurethane to assume a stable and definitive solid state. In any event, the pressure which must be applied to the polyurethane material may vary from few kg/sq.cm, for example from two kg/sq.ca (0,203 MPa) up to and beyound one hundered kg/sq.cm (10,13 MPa).

A particular aspect of this invention in so far as it relates to compact, anhydrous polyurethane materials is that the starting of compression is best chosen immediately after the material begins to gel (gel time) and before the moment at which a filament is formed (filament time). In the case of semi-compact polyurethane materials containing a certain percentage of water, the starting of compression takes place after cream has begun to form (cream time), preferably after the beginning of the expansion phase and before the moment of filament formation (filament time). In general terms, the moment for stating the compression phase of polyurethane material within the mould may be chosen between 10% and 70% of the time interval comprised between the gel time and the filament time, for compact anhydrous polyurethane materials, and likewise between the cream time and the filament time for semi-compact polyurethane materials containing a percentage of water.

Under certain conditions or in order to produce specific articles it is preferable to cause the polyurethane to flow during compression and to work with excess quantities of polyurethane material. also called "extra-charge", which may vary from 5% to 40% of the weight of the moulded article. further providing the mould with a compression chamber in which the cavity of the mould opens.

The method and apparatus according to this invention will be further illustrated here below with reference to the manufacturing of shoe soles, it being understood, nevertheless, that the invention may be applied for manufacturing articles requiring a perfect and faithful reproduction of the design of the shaping cavity of a mould. In the drawings:
Fig. 1 shows a longitudinal section of an open mould for the manufacture of a shoe sole according to the invention, in which the polyurethane material has been completely fed into the mould cavity;
Fig. 2 is a cross sectional view along the line 2-2 of figure 1;
Fig. 3 is a view similar to that of figure 1 with mould in the closed condition;
Fig. 4 is an anlarged view showing a portion of figure 1;
Fig. 5 is a graph illustrating the succession in time of key moments in the process for a compact, anhydrous polyurethane;
Fig. 6 is a graph illustrating the succession in time of key moments for a semi-compact polyurethane containing a small percentage of water.

Fig. 7 is a bottom view of a sole moulded according to the invention.

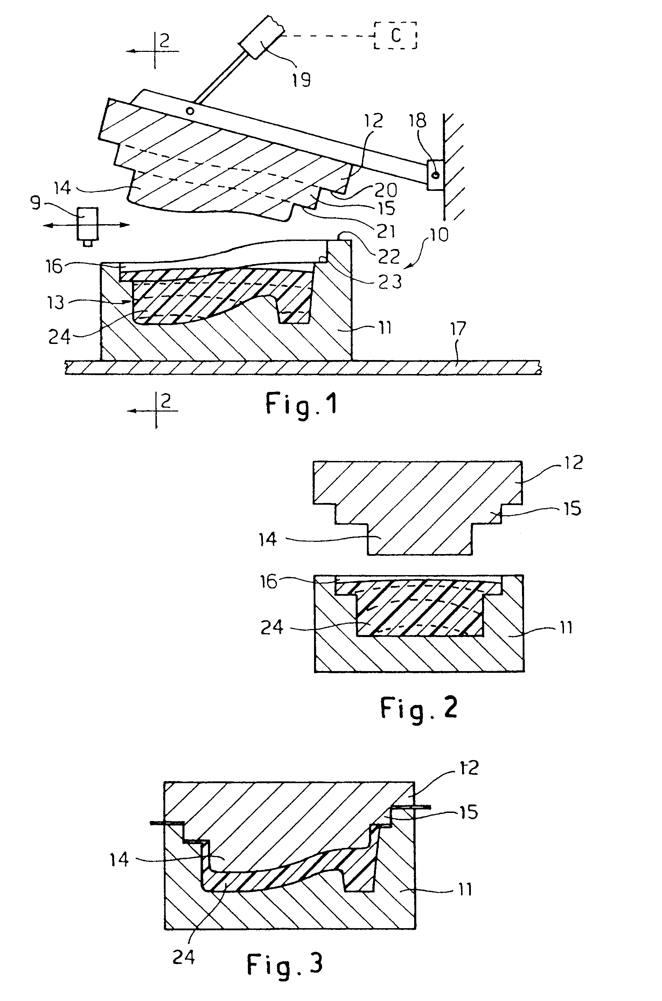

Figures 1 to 4 show a open mould for the production of shoe soles in polyurethane material, obtained by pouring into the cavity of the mould a liquid polyurethane mixture produced in a suitable mixing head 9, from metered quantities of a polyole and an isocyanate for compact polyurethane. In the illustrated example, the mould 10 consists of a lower mould section 11 and an upper mould section or lid 12 to close the lower section 11. The lower section 11 of the mould comprises a shaped cavity 13 which reproduces the shape of the article to be produced, while the upper section or mould lid 12 presents a downwardly protruding male or plug member 14, capable of penetrating into the cavity 13 of the lower section of the mould. The plug member 14 may consist of a single piece or may be fixed in a interchangeable way to the closing lid 12 directly, or, as in figures 1 and 2, through an intermediate ram or piston member 15 which adapts into a compression chamber or cavity 16 at the lower mould section provided over and around the mould cavity 13 such as to constitute a widening extension of mould cavity capable of being totally or partially filled by an extra-charge of the polyurethane mixture. The lower section 11 of the mould may be fixed in a usual way to a support member or located on a turning table together with a respective lid or upper mould section 12, for example hinged at 18 to the turning table structure. Closing means 19 are provided for closing the lid 12 and looking the same against the lower part of the mould 11 said closing means being of any type, whether mechanical, hydraulic or pneumatic or other combination. Reference C in figure 1 indicates a settable time control device operatively connected to actuating means 19 to close the mould or to apply a pressure for compacting the semi-solid polyurethane material after a pre-fixed time delay from the feeding of the polyurethane into the mould.

The working of the apparatus is now described: the polyurethane mixture provided by a mixing device 9 in liquid form is firstly poured or fed in the prescribed quantity into the mould cavity 13, with the mould in the open condition of figure 1; than the polyurethane mixture is let to change its physical state in an unrestrained condition to assume an intermediate polymeric or semi-solid state in which the polyurethane material may flow and may be compacted to assume and maintain the shape of the mould cavity. When the polyurethane has reached the required semi-solid condition, well before the filament time, the mould is closed, and a pressure is applied to the material in the cavity 13 of the mould and in the compression chamber 16 by ram member 15, causing the same polyurethane to flow inside the mould cavity and to be compacted against the shaped surface of the mould cavity, thus removing or preventing the formations of air-bubbles or air cavities on the outer surface of the moulded article. The pressure on the polyurethane material is maintained for a length of time necessary for the polyurethane to polymerize and to harden, than the moulded article may by demoulded.

The use of an appropriate pressure for flowing and compacting the polyurethane into the mould, applied at an appropriate time as referred above, in which the pressure value will depend from properties and formulation of polyurethane materials, as well as the flowing of the same material at the above mentioned physical conditions inside the mould, prevent the formulation of air bubbles and air cavities on the outher surface of the moulded article, and a better reproduction of the design; furthermore, applying a pressure on the polyurethane material as referred above, will improve the properties of moulded articles, such as the wear stand allowing to produce articles, in particular shoe soles or portion thereof, of reduced weight.

In the shown example, the intermediate ram member 15 of the upper lid 12 carries out a double function acting as both a compressing member for the polyurethane mixture in the mould cavity, and as a sealing member along the opposite, nearby edges of both sections 11 and 12 of the mould. The smaller length and with dimensions of the ram member 15 with respect to the lid 12 also define peripheral steps 20 and 21, respectively 22 and 23 on the opposite edges of both sections of the mould which, when the mould is closed, create a labyrinth seal to allow a strong pressure to be applied on the polyurethane mixture. It is nevertheless clear that both the mould and the sealing system can be differently obtained and changed from the above embodiment. In the present case for the manufacturing of shoe soles, the use of a mould in which the polyurethane mixture is poured in an open mould has been shown, however the invention is also applicable to injection moulding systems providing the mould with ram members and actuating means suitable for applying a pressure on the polyurethane mixture 24, as described above.

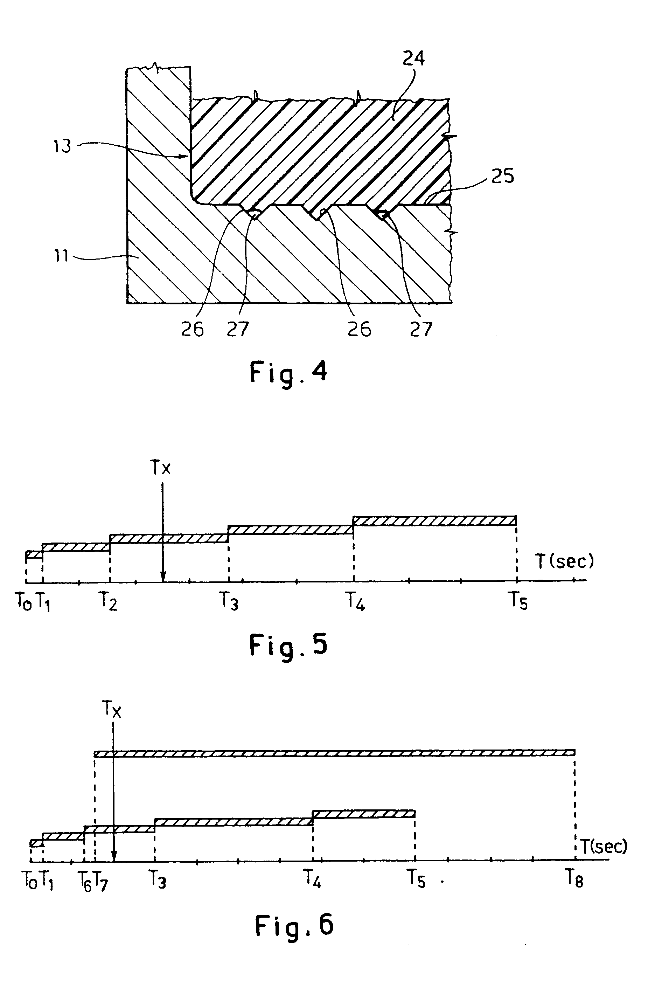

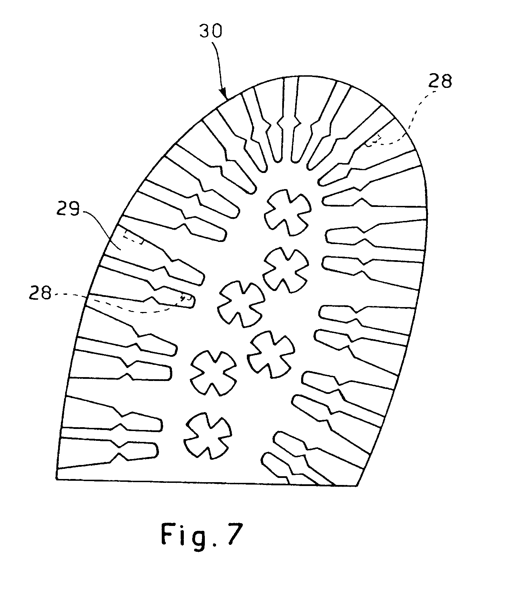

Figure 4 of the attached drawings shows an enlarged view of the lower mould section 11 and of the polyurethane mixture 24, while figure 7 shows the bottom face of a moulded sole 30. The bottom 25 of the cavity 13 of the mould in figure 4 include cavities or grooves 26 which determine protrusions 29 at the bottom surface of the sole facing the ground. Small air-bubbles 27 may be trapped in these cavities or grooves 26 of the bottom surface of the mould cavity during the feeding of liquid polyurethane mixture which, due to the strong surface tension of the polyurethane which prevent the liquid to penetrate and fill said grooves. Therefore unless said air-bubbles are removed before the polymerization and hardening of the polyurethane, air-bubbles 27 remain trapped between the surface 25 of the bottom of the mould cavity and the polyurethane material 24, causing the formation of imperfections or corresponding air-cavities 28 on the surface of the moulded article 30.

As a result of trials and experiments undertaken with compact or semi-compact polyurethane materials, it has been discovered that the cause of the above negative phenomena is due to an insufficiency of pressure usually created by the expansion process of the polyurethane material in a closed mould and by the fact that the full pressure mainly acts when the critical points of the polymerization process has already occurred.

In the polymerization and hardening process of the polyurethane material, a short period of time exists in which the mass of material changes from liquid to solid state. This change from liquid to solid state occurs through modification of the molecular structures of the polyurethane material , allowing its assume a semi-solid state as previously referred to.

According to the invention it has thus been discovered that by applying a pressure or a compression for compacting the polyurethane material after the feeding into the mould has been stopped, with a delay which can be determinated in advance within a specific time interval during the polymerization process when the material has reached the referrd to semi-solid condition and is still in a flowable state, it is possible to positively influence the moulded articles, preventing the formation of surface air- cavities and thereby abtaining a perfect reproduction of the design of the mould cavity.

The moment at which the compression of the polyurethane material in the mould should occur, the period for which the required pressure should be applied and the value of the pressure may vary from material to material and may also depend on the shape and dimensions of the of the articles to be moulded. In order to obtain good results, such compression parameters must be determined through preliminary trials, however it must occur within a time interval in the polymerization process of the polyurethane, which follows the end of the pouring or feeding step of the polyurethane into the mould cavity and which precedes the instant in which the filament forms, normally referred to as "filament time". It is in this time interval' specifically after the gelification phase or the formation of cream, in which one must act by compressing the polyurethane material into the mould in order to obtain the desired results. Better results may be obtained causing the polyurethane material to flow into the mould cavity during the closure of the mould as well as during the initial steps of the compression.

The above is explained in greater detail with reference to the graph of figures 5 and 6. As described above, the polyurethane material may by of a compact or anhydrous type, or alternatively of semi-compact type containing a certain quantity of water through the base formulation or through atmospheric humidity. Generally the polyurethane material is obtained from a polyole for compact polyurethane, of polyether or polyester base, and from an isocyanate such as, for example, a phenylmethane - 4, 4' - diisocyanate prepolymer (MDI) which are mixed in the necessary quantities in order to obtain a required liquid mixture of polyurethane.

In detail , the graph in figure 5 shows the characteristic periods of a compact anhydrous polyurethane, expressed in seconds. To represents the starting point for pouring or feeding the polyurethane mixture into the mould, while T₁ represents the end of pouring or feeding phase. The time interval Tᵢ -Tₒ will vary from case to case and in general will depend on the quantity of the mixture to be fed into mould 11 and on the delivery of the mixing apparatus. In the polyurethane material case referred to the first characteristic time interval of the polymerization process is the period necessary for gelification commonly called "gel time", indicated by T₂ which represents the starting moment of the gelidification phase of the polyurethane mixture. The time necessary for filament formation. commoly called "filament time" starts at T₃, and is defined by moment T₃in the diagram of figure 5 and, as known, the time before T₃ constitutes an intermediary critical phase in the polymerization or hardening process of the polyurethane material. Further characteristic time intervals of this process are the so-called "tack-free time" indicated by T 4, and the "pinch time" shown by Tₛ, after which the moulded article can be removed from the mould.

According to this invention, and in the case of an anhydrous polyurethane material, it has been found worthwhile to apply the pressure to the material , for example through the same ram action exercised by the closure of the lid 12 in figure 1, or in other siutable way, at the moment Tₓ following the time T₁ at the completion the feeding of the mixture into the mould, preferably between time T₂ or gelification time and time T₃ or filament time. Since the starting point T for applying the pressure or the compacting compression of the polyurethane material in the mould cavity may vary, depending on specific parameters relating to the type of polyurethane, as well as the characteristics of the article to be produced, in general terms it can be stated that the moment for closing of the mould in figure 1, being the starting moment for the compression of the polyurethane material, will occur between 10% and 70% of the time interval T₂-T₃ which runs from "gel time" T₂ and "filament time" T₃.

The graph in figure 6, as in figure 5, indicates the characteristic moments in the polymerization process for a semi-compact polyurethane material which has absorbed or contains a percentage of water.

In the example of figure 6, times To, Ti, T₃, T₄, and T₅ have the same meaning as the corresponding times indicated in figure 5; since the presence of water in the polyurethane composition brings about the formation of a cream, and given such cream to grow, or to expand by increasing its volume, the previously referred to time T₂ has been substituted by time T₆ being the instant cream begins to form, commonly called "cream time", to which time T₇ must be added immediately thereafter, called "expansion time", from which the expansion phase of the mixture occurs in the mould; the expansion terminates at time T₈ following time T₅ referred above after which the moulded article may be removed from the mould.

In figure 6 as well, the time Tₓ for exerting a pressure, or a compacting compression on the polyurethane material in the mould follows the time T₁ at the end of the pouring or feeding step of the mixture into the mould, and preferably falls between the "cream time" T₅ and the "filament time" T₃, or, more precisely, after the expansion time T₇ of the polyurethane material. As in the prior case, the starting point T for the compression of the polyurethane material or for the closing of the mould in a open mould pouring system, will depend on the polyurethane material and on the characteristics of the article to be moulded. Such moment Tₓ shall tend to occur, as a general guide, during a period again within 10% and 70% of the tine interval running from the "cream time" T₆ to the "filament time" T₃.

Trials have been carried out in different working conditions for both types of material using materials of the Italian firm Routinol, sold commercially under the trade mark "Routinol SP/A 65-90" and "Routinol SP/C 65-OOB" respectively. Moulds for manufacturing shoe-soles having fine markings on the bottom were used. In both cases optimal results that is optimal reproductions of the impression or design of the moulds, free from air bubbles, were obtained closing the moulds or, more precisely, starting the compression of the polyurethane material, after approximately 15-25 seconds from the time Ti, keeping the mould closed for approximately 80 + 130 seconds with an approximately 25 + 35 kg / sq. cm. (2,53-3,55 MPa) pressure value. In such conditions an extra-charges has been provided, being an excess weight of approximately 20 + 25% of polyurethane material fed into the mould, even if in general terms it is possible to operate with extra-charges or excess weights greater or less, the limits being between 5% and 40% in weight with respect to the moulded article.

Depending on the desired aims as a function of the article to be moulded, the amount of pressure to be applied to the material in the mould as well as the manner of applying such pressure may be important. In general term it is necessary to operate under pressures greater than that which would be generated spontaneously in a closed mould merely through self-expansion of the mixture to compact the polyurethane material, for example under pressures exceeding 2kg / sq. cm (0,203 MPa). In practice it is worthwhile to operate under much higher pressures, in the order of a few tens of kg / sq. cm (a few MPa) and in certain cases even in the order of a few hundred kg/sq. cm. (a few tens of MPa) beyond , according to the requirements of the article to be moulded. The same pressure or the same compressing action on the polyurethane material in the conditions specified above may take place in a single phase, gradually increasing the pressure, or in several successive steps, acting contemporaneously with increasing pressure levels applied to the entire free surface of the material in the mould or beginning from one or more distinct points and then extending the pressure to the entire free surface of the material within the mould cavity in such a way as to produce a partial flow of the material from the cavity inside the mould, already in polymerization stage, causing in this way a plastic flow within the entire mass of material which assists in adhering to the deepest and smallest cavities of the mould, eliminating any air bubbles to be trapped and preventing the formation of air bubbles on the surface of the moulded article. The dotted lines in figures 1 and 2 illustrate by way of example the starting of the polymerization process and the change of state occuring between the initial liquid state of the mixture and the semi-solid state when, the material swells slightly. In this phase of the polymerization process the polyurethane material in the mould is in an evolving plastic state and is capable of being subjected to non-elastic or plastic deformations, maintaining a shape which ensures the perfect adhesion to the mould impression or design of the surface of the internal cavity of the mould. It is stressed, nevertheles, that the above description and illustrations through the attached drawings are purely intended as example of this invention, which in substance consists of the application of pressure and the compressing of polyurethane material in the mould during its transitional phase between liquid and solid states, maintaining such compression at least until such time as the polymerization process has yet to go beyond a critical phase although not yet definitively ended.

As referred to above, the invention further concerns a particular apparatus and mould structure conceived for the realization of shoe soles, though not limited to these, in which the male section of the mould is supported by the lid through an intermediate section having a ram-like action which applies final pressure to the material in the mould and to a greater surface area than that of the article under production, thus allowing a better seal during the compression phase.

## Claims

1. Method for moulding articles of compact or semi-compact polyurethane materials comprising the steps of:
feeding a metered quantity of a liquid polyurethane material (24) into a cavity (13) of a mould (10),
applying a compressive force to said polyurethane material (24) for at least part of the polymerization process, and letting the polyurethane material (24) polymerize to a solid state and to assume the shape of the mould cavity (13),
characterized by
feeding said liquid polyurethane material (24) into said cavity (13) and an additional cavity (16), constituting an extension of said cavity (13) and being filled with an extra-charge of the polyurethane material (24), of the mould (10)
with the mould (10) being in the open condition,
allowing said liquid polyurethane material (24) to start an initial phase of polymerization and to assume a flowable evolving plastic condition comprised between the liquid and solid state, maintain said polyurethane material (24) in an unrestrained condition in the cavity (13, 16) of the mould (10) until it assumes said evolving plastic condition,
close the mould (10) and compress the polyurethane material (24) at a time T being after the gel time (T₂) or the cream time (T₆) but preceeding the filament time (T₃), by applying a compressive force to the polyurethane material (24) in the mould greater than 2 kg/cm² (0,203 MPa).

2. Method according to claim 1, characterized in that the time T for starting the compression of the material lies between 10 and 70 % of the time interval between the gel-time (T₂) or the cream time (T₆) and the filament time (T₃).

3. Method according to claim 1, in which during the formation of the cream the polyurethane material is subjected to an expansion of volume, characterized by the fact of compressing the polyurethane in the mould beginning from a moment following the starting of the expansion of the material (T₇).

4. Method according to claim 1, characterized by the fact that the material is compressed by way of a single compression phase.

5. Method as described in claim 1, characterized by the fact that the material is compressed to a final value by successive compression phases of increasing pressure values.

6. Method according to any of the claims 1 to 5, characterized by the fact that pressure is applied to the polyurethane material in the mould acting contemporaneously on the whole surface area of the material in the mould cavity.

7. Method according to any of the claims 1 to 5, characterized by the fact that pressure is applied to the polyurethane material in the mould starting from at least one point on the surface area of the material in the mould cavity producing a flow of polyurethane material within said mould cavity.

8. Method according to any of the claims 1 to 7, characterized by the fact that compression of the polyurethane material in the mould is maintained for at least part of the time necessary to complete the polymerization.

9. Method according to any of the claims 1 to 8, characterized by the fact that pressure is applied to the polyurethane material in the mould at pressure value greater than 10 kg/cm² (1,013 MPa).

10. Method according to any of the claims 1 to 9, characterized by the fact that pressure is applied to the polyurethane material in the mould at pressure value greater than 100 kg/cm² (10,13 MPa).

11. Method according to any of the claims 1 to 10, characterized by the fact that the extra-charge of the polyurethane material is between 5 and 40 % of the weight of the moulded article.

12. Method according to claim 1, particularly for the production of shoe soles in a mould, comprising a lower mould section (11) having a cavity (13) defining the impression of the lower surface of the sole and an upper mould section (12) which penetrates into the cavity (13) of the lower mould section (11), characterized by the fact that the cavity (13) of the lower mould section is filled with an extra-charge of polyurethane material until at least a portion of a supplementary cavity (16) above and surrounding the mould cavity (13) is filled, and by penetrating the supplementary cavity (16) with the upper mould section (12) causing, contemporaneously, compression of the remaining material by applying a pressure by the upper mould section (12) acting on the free surface of the material which has filled the supplementary mould cavity (16).

13. Apparatus for moulding polyurethane articles according to the method of any of the claims 1 to 12, by applying compressive forces on the polyurethane in an evolving plastic state, in which the mould comprises a lower mould section (11) defining a shaped cavity (13) for the article to be moulded, and an upper mould section (12) having a male member (14) on a cover lid, said male member (14) penetrating into said mould cavity (13), means (19) for opening and closing of the two mould sections (11, 12) and means (9) for feeding metered quantities of the polyurethane material into the mould, characterized in that said lower mould section (11) further includes an enlarged cavity (16) encircling the mould cavity (13) and defining a compression chamber for receiving an extra charge of polyurethane material, said enlarged cavity (16) opening into and being positioned above said mould cavity (13), and in that said male member (14) is attached to the lid provided on the upper mould section (12) by an intermediate ram section (15), said male member (14) and said intermediate ram section (15) defining ram means seelingly protruding on and into the cavity (13) of the mould.

14. Apparatus according to claim 13, characterized in that the peripheral edges (22, 23) of the enlarged cavity (16) of the lower mould section (11) and corresponding peripheral edges (20, 21) of said upper mould section (11) and said intermediate ram section (15) comprise step shaped surfaces matching around said enlarged cavity (16) and defining sealing means.

## Patentansprüche

1. Verfahren zum Formpressen von Gegenständen zu kompakten oder halbkompakten Polyurethanmaterialien, welches die Schritte umfaßt: Einführen einer abgemessenen Menge an flüssigem Polyurethanmaterial (24) in die Ausnehmung (13) einer Preßform (10),
Anwenden einer Kompressionskraft auf das Polyurethanmaterial (24) während zumindest eines Teils des Polymerisationsverfahrens, und Erlauben, daß das Polyurethanmaterial (24) zu einem festen Zustand polymerisiert und die Form der Preßformausnehmung (13) annimmt, dadurch gekennzeichnet, daß
das flüssige Polyurethanmaterial (24) in die Ausnehmung (13) und eine zusätzliche Ausnehmung (16) der Preßform (10) eingeführt wird, wobei diese zusätzliche Ausnehmung (16) eine Erweiterung der Ausnehmung (13) darstellt und mit einer Extra-Beschickung des Polyurethanmaterials (24) gefüllt ist, wobei die Preßform (10) im offenen Zustand ist,
das flüssige Polyurethanmaterial (24) eine Anfangsphase der Polymerisation beginnen und einen fließfähigen, sich entfaltenden plastischen Zustand einnehmen kann, der zwischen dem flüssigen und dem festen Zustand enthalten ist,
das Polyurethanmaterial (24) in der Ausnehmung (13, 16) der Preßform (10) in einem unbeschränkten Zustand gehalten wird, bis es den sich entfaltenden plastischen Zustand einnimmt,
die Preßform (10) verschlossen und das Polyurethanmaterial (24) zum Zeitpunkt T_{"} komprimiert wird, der nach der Gelzeit (T₂) oder der Startzeit (T₆) jedoch vor der Faserzeit (T₃) liegt, indem auf das Polyurethanmaterial (24) in der Preßform eine Kompressionskraft von mehr als 2 kg/cm² (0,203 MPa) angewendet wird.

2. Verfahren nach Anspruch 1, dadurch gekennzeichnet, daß die Zeit (Tₓ) für den Beginn der Kompression des Materials zwischen 10 und 70 % des Zeitintervalls zwischen der Gelzeit (T₂) oder der Startzeit (T₆) und der Faserzeit (T₃) liegt.

3. Verfahren nach Anspruch 1, wobei das Polyurethanmaterial während der Bildung der Startreaktion einer Volumenexpansion unterzogen wird, gekennzeichnet durch die Kompression des Polyurethans in der Preßform, die zu einem Zeitpunkt beginnt, der dem Beginn der Expansion des Materials (T₇) folgt.

4. Verfahren nach Anspruch 1, dadurch gekennzeichnet, daß das Material durch eine einzige Kompressionsphase komprimiert wird.

5. Verfahren nach Anspruch 1, dadurch gekennzeichnet, daß das Material durch aufeinanderfolgende Kompressionsphasen mit ansteigenden Druckwerten bis zum Endwert komprimiert wird.

6. Verfahren nach einem der Ansprüche 1 bis 5, dadurch gekennzeichnet, daß auf das Polyurethanmaterial in der Preßform ein Druck angewendet wird, der gleichzeitig auf den gesamten Oberflächenbereich des Materials in der Preßformausnehmung wirkt.

7. Verfahren nach einem der Ansprüche 1 bis 5, dadurch gekennzeichnet, daß der Druck auf das Polyurethanmaterial in der Preßform beginnend von wenigstens einem Punkt auf dem Oberflächenbereich des Materials in der Preßformausnehmung angewendet wird, wodurch ein Fluß des Polyurethanmaterials innerhalb der Preßformausnehmung erzeugt wird.

8. Verfahren nach einem der Ansprüche 1 bis 7, dadurch gekennzeichnet, daß die Kompression des Polyurethanmaterials in der Preßform wenigstens für einen Teil der Zeit aufrechterhalten wird, die für den Abschluß der Polymerisation erforderlich ist.

9. Verfahren nach einem der Ansprüche 1 bis 8, dadurch gekennzeichnet, daß der Druck auf das Polyurethanmaterial in der Preßform mit einem Druckwert von mehr als 10 kg/cm² (1,013 MPa) angewendet wird.

10. Verfahren nach einem der Ansprüche 1 bis 9, dadurch gekennzeichnet, daß der Druck auf das Polyurethanmaterial in der Preßform mit einem Druckwert von mehr als 100 kg/cm² (10,13 MPa) angewendet wird.

11. Verfahren nach einem der Ansprüche 1 bis 10, dadurch gekennzeichnet, daß die Extra-Beschickung an Polyurethanmaterial zwischen 5 und 40 % des Gewichtes des geformten Gegenstandes beträgt.

12. Verfahren nach Anspruch 1, insbesondere zur Herstellung von Schuhsohlen in einer Preßform, die einen unteren Preßformbereich (11) mit einer Ausnehmung (13), die den Abdruck der unteren Oberfläche der Sohle definiert, und einen oberen Preßformbereich (12) umfaßt, der in die Ausnehmung (13) des unteren Preßformbereichs (11) eindringt, dadurch gekennzeichnet, daß die Ausnehmung (13) des unteren Preßformbereichs mit einer Extra-Beschickung an Polyurethanmaterial gefüllt ist, bis mindestens ein Teil der ergänzenden Ausnehmung (16) über der und die Preßformausnehmung (13) umgebend gefüllt ist, und daß die Durchdringung der ergänzenden Ausnehmung (16) durch den oberen Preßformbereich (12) gleichzeitig die Kompression des restlichen Materials bewirkt, indem durch den oberen Preßformbereich (12) ein Druck angewendet wird, der auf die freie Oberfläche des Materials wirkt, das die ergänzende Preßformausnehmung (16) gefüllt hat.

13. Vorrichtung zum Formpressen von Polyurethangegenständen nach dem Verfahren nach einem der Ansprüche 1 bis 12 durch Anwendung von Kompressionskräften auf das Polyurethan in einem sich entfaltenden plastischen Zustand, wobei die Preßform einen unteren Preßformbereich (11), der eine geformte Ausnehmung (13) für den zu formenden Gegenstand definiert, und einen oberen Preßformbereich (12), der ein vorstehendes Teil (14) auf dem Deckel aufweist, wobei dieses vorstehende Teil (14) in die Preßformausnehmung (13) eindringt, eine Einrichtung (19) zum Öffnen und Schließen der beiden Preßformbereiche (11, 12) und eine Einrichtung (9) zur Einführung der abgemessenen Mengen des Polyurethanmaterials in die Preßform umfaßt, dadurch gekennzeichnet, daß der untere Preßformbereich (11) außerdem eine erweiterte Ausnehmung (16) umfaßt, die die Preßformausnehmung (13) umgibt und eine Kompressionskammer zur Aufnahme der Extra-Beschickung des Polyurethanmaterials definiert, wobei sich diese erweiterte Ausnehmung (16) in die Preßformausnehmung (13) öffnet und über dieser angeordnet ist, und daß das vorstehende Teil (14) durch einen mittleren Verdichtungsabschnitt (15) an den Deckel angebracht ist, der auf dem oberen Preßformbereich (12) vorgesehen ist, wobei das vorstehende Teil (14) und der mittlere Verdichtungsabschnitt (15) eine Verdichtungseinrichtung definieren, die abdichtend auf und in die Ausnehmung (13) der Preßform ragt.

14. Vorrichtung nach Anspruch 13, dadurch gekennzeichnet, daß die Umfangskanten (22, 23) der erweiterten Ausnehmung (16) des unteren Preßformbereichs (11) und die entsprechenden Umfangskanten (20, 21) des oberen Preßformbereichs (11) und des mittleren Dornabschnittes (15) stufenförmige Oberflächen umfassen, die um die erweiterte Ausnehmung (16) passen und eine abdichtende Einrichtung definieren.

## Revendications

1. Procédé pour mouler des articles en polyuréthane compact ou semi-compact comprenant les étapes consistant :
à introduire une quantité mesurée d'un polyuréthane liquide (24) dans la cavité (13) d'un moule (10);
à appliquer une force de compression audit polyuréthane (24) pendant au moins une partie du processus de polymérisation; et
à laisser le polyuréthane (24) polymérisé jusqu'à ce qu'il prenne un état solide et qu'il épouse la forme de la cavité (13) de moule, caractérisé en ce que :
on introduit ledit polyuréthane liquide (24) dans ladite cavité (13) et dans une cavité supplémentaire (16), constituant un prolongement de ladite cavité (13) et remplie d'une charge supplémentaire de polyuréthane, du moule (10), le moule (10) étant dans l'état ouvert,
on laisse ledit polyuréthane liquide (24) commencer une phase initiale de polymérisation et prendre un état plastique évoluant vers le fluage et compris entre l'état liquide et l'état solide,
on maintient ledit polyuréthane (24) dans un état libre dans la cavité (13, 16) du moule (10) jusqu'à ce qui prenne ledit état plastique évoluant vers le fluage,
on ferme le moule (10) et on comprime le polyuréthane (24) à un temps Tₓ succédant au temps (T₂) de gel ou au temps (T₆) de crème mais précédant le temps (T₃) de filament, par application, au polvuréthane (24) se trouvant dans le moule, d'une force de compression supérieure à 2 kg/cm² (0,203 MPa).

2. Procédé selon la revendication 1, caractérisé en ce que le temps T où l'on commence la compression du polyuréthane se situe entre 10 et 70% de l'intervalle de temps compris entre le temps (T₂) de gel ou le temps (T₆) et le temps (T₃) de filament.

3. Procédé selon la revendication 1, dans lequel, pendant la formation de la crème, le polyuréthane est soumis à une dilatation volumique, caractérisé par le fait que l'on comprime le polyuréthane dans le moule à partir d'un moment faisant suite au début de la dilatation du polyuréthane (T₇).

4. Procédé selon la revendication 1, caractérisé par le fait que l'on comprime le polyuréthane à l'aide d'une seule étape de compression.

5. Procédé selon la revendication 1, caractérisé par le fait que l'on comprime le polyuréthane jusqu'à une valeur finale par étapes successives de compression sous de valeurs de pression croissantes.

6. Procédé selon l'une quelconque des revendication 1 à 5, caractérisé par le fait que l'on applique la pression au polyuréthane dans le moule en agissant en même temps sur la totalité de la région superficielle du polyuréthane présent dans la cavité du moule.

7. Procédé selon l'une quelconque des revendication 1 à 5, caractérisé par le fait que l'on applique la pression au polyuréthane se trouvant dans le moule en commençant à partir d'au moins un point de la région superficielle du polyuréthane se trouvant dans la cavité du moule, et en produisant un écoulement de polyuréthane à l'intérieur de la cavité de moule.

8. Procédé selon l'une quelconque des revendications 1 à 7, caractérisé par le fait que l'on maintient la compression du polyuréthane dans le moule pendant au moins une partie du temps nécessaire pour compléter la polymérisation.

9. Procédé selon l'une quelconque des revendications 1 à 8, caractérisé par le fait que l'on applique la pression au polyuréthane dans le moule sous une valeur de pression supérieure à 10 kg/cm² (1,013 MPa).

10. Procédé selon l'une quelconque des revendication 1 à 9; caractérisé par le fait que l'on applique la pression au polyuréthane dans le moule sous une valeur de pression supérieure à 100 kg/cm² (10,13 MPa).

11. Procédé selon l'une quelconque des revendications 1 à 10, caractérisé par le fait que la charge supplémentaire de polyuréthane est comprise entre 5 et 40% du poids de l'article moulé;

12. Procédé selon la revendication 1, particulièrement pour la fabrication de semelles de chaussures dans un moule comprenant une section inférieure (11) de moule comportant une cavité (13) définissant l'empreinte de la surface inférieure de la semelle et une section supérieure (12) de moule qui pénètre dans la cavité de la section inférieure (11) de moule, caractérisé par le fait que l'on remplit la cavité (13) de la section inférieure de moule avec une charge supplémentaire de polyuréthane jusqu'à ce qu'au moins une partie d'une cavité supplémentaire (16) située au-dessus et autour de la cavité (13) de moule soit remplie, et par le fait que la pénétration de la cavité supplémentaire (16) par la section supérieure (12) de moule provoque, de façon concomitante, une compression du polyuréthane restant par application d'une pression par la section supérieure (12) de moule agissant sur la surface libre du polyuréthane qui a rempli la cavité supplémentaire (16) de moule.

13. Appareil pour mouler des articles en polyuréthane à l'aide du procédé selon l'une quelconque des revendications 1 à 12, par application de forces de compression au polyuréthane dans un état plastique évoluant, appareil dans lequel le moule comprend une section inférieure (11) de moule définissant une cavité profilée (13) pour l'article à mouler, et une section supérieure (12) de moule comportant un élément mâle (14) sur un couvercle de fermeture, ledit élément mâle (14) pénétrant dans ladite cavité (13) de moule, un moyen (19) pour ouvrir et fermer les deux sections (11, 12) de moule et un moyen (9) pour introduire des quantités mesurées du polyuréthane dans le moule, caractérisé par le fait que ladite section inférieure (11) de moule comprend en outre une cavité agrandie (16) entourant la cavité (13) de moule et définissant une chambre de compression destinée à recevoir une charge supplémentaire de polyuréthane, ladite cavité agrandie (16) débouchant dans ladite cavité (13) de moule et étant positionnée au-dessus de cette cavité (13), et par le fait que ledit élément mâle (14) est fixé au couvercle présent sur la section supérieure (12) de moule par une section de piston intermédiaire (15), ledit élément mâle (14) et ladite section de piston intermédiaire (15) définissant un moyen formant plongeur faisant saillie sur et dans la cavité (13) du moule.

14. Appareil selon la revendication 13, caractérisé en ce que les bords périphériques (22, 23) de la cavité agrandio (16) de la section supérieure (11) de moule et les bords périphériques correspondants (20, 21) de ladite section supérieure (11) de moule et de ladite section de piston intermédiaire (15) comprennent des surfaces épaulées complémentaires autour de ladite cavité agrandie (16) et définissant des moyens d'étanchéité.
